# DEMANDE DE BREVET EUROPEEN

(11) **EP 2 093 202 A1**
(43) Date de publication de la demande: **26.08.2009**
(21) Numéro de dépôt: 09290051.3
(22) Date de dépôt: 26.01.2009
(51) Int. Cl.: C04B 35/44, C04B 35/50

(54) **Céramiques transparentes à base de YAG**

(30) Priorité: 31.01.2008 FR 0800526
(71) Demandeur: Compagnie Industrielle des Lasers Cilas, 45100 Orleans (FR)
(72) Inventeur: Sallé, Christian, 87000 Limoges (FR); Leonet, Christian, 19250 Maussac (FR); Rabinovitch, Yoël, 87100 Limoges (FR); Boulesteix, Rémy, 87510 Saint Gence (FR); Maitre, Alexandre, 87270 Couzeix (FR)
(74) Mandataire: Bonnetat, Christian

(57) **Abrégé**

- Céramiques transparentes à base de YAG.
- Selon l'invention, une telle céramique est obtenue par le frittage à au moins 1750°C d'une préforme portée par un support de céramique à base de YAG de même composition, lui-même obtenu à partir du frittage d'une préforme à au plus 1750°C.

## Description

La présente invention concerne les céramiques transparentes à base de grenat d'yttrium-aluminium (ci-après YAG).

Par exemple par le brevet FR-2 545 272 (84 06679), on sait qu'il est possible de fabriquer des objets transparents en céramique transparente à base de YAG. Ces objets transparents peuvent être utilisés dans de nombreuses applications, telles que enveloppes de lampe à décharge, amplificateurs laser, hublots, etc ...

De façon connue, pour obtenir un tel objet, on commence par réaliser une préforme de celui-ci à partir d'un mélange de matières constitutives divisées de faible granulométrie (par exemple poudres d'oxydes d'yttrium et d'aluminium et éventuellement, à titre de dopant, d'un oxyde de terre rare, tel que l'oxyde de néodyme ou l'oxyde de scandium), puis ladite préforme est frittée pendant plusieurs heures à température élevée pour la densifier et communiquer à l'objet qui résulte dudit frittage ses propriétés optiques et thermiques.

Lesdites propriétés optiques et thermiques dépendent, entre autres paramètres, de la granulométrie des matières constitutives utilisées pour réaliser ladite préforme et de la température de frittage de cette dernière. Elles sont d'autant meilleures que cette granulométrie est plus fine et que cette température de frittage est plus élevée.

Idéalement, d'excellents résultats seraient obtenus avec une granulométrie nanométrique et une température de frittage au moins égale à 1750°C.

Une telle granulométrie nanométrique des poudres constitutives peut être obtenue relativement aisément. En revanche, une température de frittage de plus de 1750°C est difficile à mettre en oeuvre.

En effet, pendant le frittage, la préforme doit être portée par un support thermiquement réfractaire (par exemple en forme de creuset) qui, de façon connue, est constitué par de l'alumine, de l'oxyde d'yttrium, du molybdène ou du tungstène. Or, à des températures aussi élevées que celles mentionnées ci-dessus pour le frittage, l'oxyde d'yttrium, le molybdène et le tungstène contaminent ladite préforme, tandis que l'alumine forme une phase eutectique avec le YAG, de sorte que, dans tous les cas, ledit support de la préforme nuit à la qualité de l'objet obtenu.

Il est donc nécessaire de limiter la température de frittage au voisinage de 1700°C, ce qui ne permet pas d'obtenir les propriétés optiques et thermiques optimales pour l'objet en céramique à base de YAG.

La présente invention a pour objet de remédier à cet inconvénient.

A cette fin, selon l'invention, le procédé pour la réalisation d'un objet en céramique transparente à base de grenat d'yttrium-aluminium, éventuellement dopé, ledit procédé comprenant le frittage d'une préforme dudit objet qui est obtenue à partir d'un mélange de matières constitutives divisées de faible granulométrie et qui est portée, pendant ledit frittage, par un support thermiquement réfractaire, est remarquable en ce que :
- dans une étape préliminaire, on réalise ledit support de la manière suivante :
   ■ à partir d'un mélange de matières divisées semblable audit mélange ayant donné naissance à ladite préforme de l'objet, on réalise une préforme dudit support ayant une composition identique à celle de ladite préforme de l'objet ; et
   ■ on fritte ladite préforme du support à une température inférieure à 1750°C pour obtenir ledit support, ainsi constitué de céramique à base de grenat d'yttrium-aluminium de même composition que ledit objet ; et
- dans une étape ultérieure, on dispose ladite préforme de l'objet sur ledit support et on la soumet à un frittage dont la température est au moins égale à 1750°C.

Ainsi, grâce à la présente invention, la préforme dudit objet ne peut pas être polluée pendant son frittage à température élevée (supérieure à 1750°C), puisque ledit support céramique présente une composition identique à celle de ladite préforme dudit objet. On remarquera qu'il est aisé d'obtenir ledit support céramique, puisque le frittage de sa propre préforme est réalisé à une température inférieure à 1750°C, ce qui permet d'utiliser les supports de frittage classiques en alumine, oxyde d'yttrium, molybdène ou tungstène. On obtient ainsi, à température inférieure à 1750°C, un support céramique dont la qualité est inférieure à celle recherchée pour ledit objet, mais est suffisante pour servir de support réfractaire pendant le frittage de la préforme de ce dernier.

On remarquera de plus que, bien que la pureté des matières divisées utilisées pour la préforme dudit support doive être aussi élevée (au moins 99% et, de préférence, de l'ordre de 99,999%) que celle des matières divisées utilisées pour la préforme dudit objet, la granulométrie des matières divisées destinées à la réalisation de ladite préforme du support céramique peut être supérieure à la granulométrie nanométrique des matières divisées destinées à la réalisation de ladite préforme de l'objet céramique. La granulométrie des matières destinées à la préforme du support céramique peut n'être que micrométrique. De bons résultats ont été obtenus lorsqu'au moins 50% en volume des particules des matières divisées destinées à la réalisation de la préforme du support céramique est comprise entre 0,01 et 10 micromètres. La densité dudit support céramique est alors inférieure à celle de l'objet à obtenir, mais suffisante pour que ledit support céramique remplisse parfaitement son office pendant le frittage dudit objet. La densité du support céramique doit être au moins égale à 95% de la densité théorique requise pour une transparence quasiment parfaite, alors que la densité dudit objet doit être au moins égale à 99,9% de cette densité théorique.

Par ailleurs, pour obtenir des produits suffisamment compacts, il est nécessaire que la surface spécifique des matières divisées destinées à la réalisation de la préforme du support céramique soit comprise entre 1 et 30 m²/g.

On peut obtenir le mélange de matières divisées nécessaire à la réalisation de la préforme du support céramique par de nombreux procédés de chimie douce, tels que sol-gel ou spray-pyrolyse.

Cependant, un tel mélange peut être réalisé après choix et pesées individuels de poudres constitutives.

Dans ce dernier cas, on peut partir de poudres d'oxyde d'aluminium Al₂O₃, et d'oxyde d'yttrium Y₂O₃ et les pesées sont réalisées pour que le mélange desdites poudres puisse être stoechiométrique et correspondre à la formule Y₃Al₅O₁₂ du YAG. Eventuellement, si la présence d'un dopant X (une terre rare telle que le néodyme) est souhaitée dans le rapport atomique de x%, on prépare la quantité désirée d'un oxyde en poudre dudit dopant pour satisfaire à la formule Y₃₋ₓXₓAl₅O₁₂ dudit YAG dopé.

Après les pesées desdites poudres, celles-ci sont ajoutées en commun à de l'eau pour obtenir des suspensions aqueuses, qui sont agitées à des fins d'homogénéisation et de destruction d'éventuels agrégats. On obtient ainsi une barbotine dont la quantité de solides en volume est de préférence comprise entre 10% et 55%. Pour fluidifier la barbotine, on peut y ajouter un dispersant, tel qu'un alcool polyvinylique (entre 0,1 % et 10% du poids total des poudres). De plus, pour faciliter la manutention ultérieure de la préforme, on peut ajouter à la barbotine un liant, tel que le polyéthylène-glycol ou tout autre polymère organique (entre 0, 1 % et 10% du poids total des poudres).

Afin d'améliorer encore la dispersion des poudres dans la barbotine, on peut ajouter à celle-ci des billes en zircone yttriée ou en alumine de grande pureté, dont la quantité varie entre une et cinq fois la masse desdites poudres, ces billes pouvant avoir un diamètre compris entre 0,1 et 10 mm.

La barbotine est agitée pendant une durée comprise entre 1 et 24 heures.

Après agitation, la barbotine est utilisée pour former la préforme dudit support céramique.

A cet effet, on peut :
- soit verser la barbotine dans un moule creux en plâtre poreux à la forme de ladite préforme et laisser la barbotine perdre progressivement son liquide, qui est absorbé par le moule (procédé "slip casting"), ne laissant finalement qu'un agglomérat compact formant ladite préforme ;
- soit verser la barbotine dans ledit moule et exercer une pression mécanique, gazeuse ou hydraulique, afin d'accélérer l'élimination du liquide à travers le moule (procédé "pressure casting"). Dans ce cas, la densité de la préforme crue peut être très élevée ;
- ou bien encore, sécher la barbotine, récupérer le mélange de poudres sec et mettre en forme ledit mélange à sec par pressage ou compaction isostatique à froid.

A ce stade de sa fabrication, ladite préforme du support céramique, qui peut présenter la forme d'un creuset, d'une plaque, d'un disque, etc ..., comporte encore tous les composés organiques qui ont été ajoutés lors de l'agitation et qui risqueraient d'apporter une certaine porosité à la préforme (ce qui limiterait sa densité et donc ses propriétés mécaniques et thermiques). Pour éliminer ces composés, on chauffe ladite préforme sous air jusqu'à 800°C.

Après un tel traitement thermique, la préforme du support céramique est disposée sur un support en alumine, oxyde d'yttrium, molybdène ou tungstène et frittée dans un four à une température comprise entre 1600°C et 1700°C pendant une durée de 1 à 20 heures. Ce frittage peut se faire à l'air, sous azote ou sous vide. Dans ce dernier cas, la densité obtenue pour le support céramique est plus élevée que lorsque le frittage a lieu à l'air ou sous azote.

On obtient ainsi un support céramique pouvant présenter la forme d'un creuset, d'une plaque, d'un disque, etc ...

Par exemple, de façon semblable à ce qui a été mentionné ci-dessus, mais à l'aide des poudres adéquates, on réalise la préforme de l'objet céramique à fabriquer.

Enfin, on dispose la préforme dudit objet sur le support céramique précédemment obtenu et on procède au frittage sous vide de cette dernière préforme dans un four à une haute température au moins égale à 1750°C pendant une durée de plusieurs heures.

On obtient alors un objet céramique présentant des propriétés optiques et thermiques élevées.

## Revendications

1. Procédé pour la réalisation d'un objet en céramique transparente à base de grenat d'yttrium-aluminium, éventuellement dopé, ledit procédé comprenant le frittage à une température au moins égale à 1750°C d'une préforme dudit objet qui est obtenue à partir d'un mélange de matières constitutives divisées de faible granulométrie et qui est portée, pendant ledit frittage, par un support thermiquement réfractaire,
**caractérisé en ce que** ledit support est réalisé à partir d'une préforme de support ayant une composition identique à celle de ladite préforme de l'objet et frittée à une température inférieure à 1750°C.

2. Objet en céramique transparente obtenu par la mise en oeuvre du procédé selon la revendication 1,
**caractérisé en ce que** sa densité est au moins égale à 99,9% de la densité théorique requise pour une transparence quasiment parfaite.

3. Procédé pour la réalisation d'un support thermiquement réfractaire destiné à porter, pendant son frittage, une préforme d'un objet en céramique transparente à base de grenat d'yttrium-aluminium, éventuellement dopé, ladite préforme de l'objet étant obtenue à partir d'un mélange de matières constitutives divisées de faible granulométrie,
**caractérisé en ce que** ledit support est réalisé à partir d'une préforme de support ayant une composition identique à celle de ladite préforme de l'objet et frittée à une température inférieure à 1750°C.

4. Procédé selon la revendication 3,
**caractérisé en ce que** la pureté des matières divisées destinées à la réalisation de ladite préforme du support est au moins égale à 99%.

5. Procédé selon l'une des revendications 3 ou 4,
**caractérisé en ce que** la granulométrie des matières divisées destinées à la réalisation de ladite préforme du support est supérieure à la granulométrie des matières divisées destinées à la réalisation de ladite préforme de l'objet.

6. Procédé selon la revendication 5,
**caractérisé en ce que** la granulométrie des matières divisées destinées à la réalisation de ladite préforme du support est micrométrique.

7. Procédé selon la revendication 6,
**caractérisé en ce qu'**au moins 50% en volume des particules des matières divisées destinées à la réalisation de ladite préforme du support ont une granulométrie comprise entre 0,01 et 10 micromètres.

8. Procédé selon l'une des revendications 3 à 7,
**caractérisé en ce que** la surface spécifique des matières divisées destinées à la réalisation de ladite préforme du support est comprise entre 1 et 30 m²/g.

9. Support thermiquement réfractaire obtenu par la mise en oeuvre du procédé spécifié sous l'une quelconque des revendications 3 à 8,
**caractérisé en ce que** sa densité est au moins égale à 95% de la densité théorique.

10. Support thermiquement réfractaire obtenu par la mise en oeuvre du procédé spécifié sous l'une quelconque des revendications 3 à 9,
**caractérisé en ce qu'**il présente la forme d'un creuset.

11. Support thermiquement réfractaire obtenu par la mise en oeuvre du procédé spécifié sous l'une quelconque des revendications 3 à 9,
**caractérisé en ce qu'**il présente la forme plate d'une plaque ou d'un disque.
